# EUROPEAN PATENT SPECIFICATION

(11) **EP 2 610 149 B1**
(45) Date of publication and mention of the grant of the patent: **03.12.2014**
(21) Application number: 12189925.6
(22) Date of filing: 25.10.2012
(51) Int. Cl.: B62J 3/00, B62J 15/00, B62J 17/02, B62K 11/00

(54) **Motorcycle**
Motorrad
Motocyclette

(30) Priority: 28.12.2011 JP 2011289099
(43) Date of publication of application: 03.07.2013
(73) Proprietor: Yamaha Hatsudoki Kabushiki Kaisha, SHIZUOKA-KEN 438-8501 (JP)
(72) Inventor: Fukami, Takehiko, Shizuoka-ken, 438-8501 (JP)
(74) Representative: Zimmermann, Tankred Klaus

(56) References cited:
- JP-U- 63 013 392
- JP-U- H01 131 689
- US-A1- 2006 087 144

## Description

### TECHNICAL FIELD

The present invention relates to motorcycles equipped with a horn (an alarm horn device).

### BACKGROUND ART

Generally, a motorcycle is provided with a front cover for covering a front part of a head pipe, and a horn is often provided inside the front cover.

JP 63-57139 U describes a motorcycle having a front cover, a handle cover disposed above the front cover, and a horn disposed inside the front cover. In this motorcycle, apertures are formed in a portion of the front cover in front of the horn, in order to ensure sufficient volume of the horn.

JP HO1 131689 shows a motorcycle according to the preamble of claim 1.

### SUMMARY OF INVENTION

It is an object of the invention to provide a motorcycle capable of having a large-sized headlight and ensuring a sufficient volume of the horn.

This object is achieved by a motorcycle of claim 1.

The present invention is based on the following findings of the inventors. In the motorcycle described in JP 63-57139 U, a headlight is provided on the handle cover. In order to increase the size of the headlight, it may be possible to dispose the headlight on the front cover, which has a larger space. The size of the headlight can be increased particularly when the front cover is formed so that its lower portion is positioned more forward than its upper portion and the headlight is disposed in the lower portion of the front cover.

However, in the foregoing motorcycle, the horn is disposed behind the lower portion of the front cover. For this reason, it is difficult to dispose a large-sized headlight in the lower portion of the front cover. On the other hand, it may appear possible to dispose the headlight in the lower portion of the front cover and also dispose the horn behind the upper portion of the front cover. However, it is necessary to form an opening in the front cover in order to ensure a sufficient volume of the horn, and water may come in from the opening. The water is undesirable for the headlight, which is positioned below the opening.

The present invention provides a motorcycle comprising: a steering shaft fixed to a handlebar; an under bracket provided on a lower portion of the steering shaft; a front fork mounted to the under bracket; a front wheel supported at a lower portion of the front fork; a front fender disposed above the front wheel and allowed to turn by operating the handlebar; a head pipe for rotatably supporting the steering shaft; a front cover being disposed in front of the head pipe and being formed so as to have a front edge comprising an upper front edge and a lower front edge, and so that the lower front edge is positioned more forward than the upper front edge as viewed from the side of the vehicle; a headlight; and a horn exposed and positioned between a portion of the front cover and the front fender as viewed from the front of the vehicle. The front fender has a recessed portion recessed downward and a lower portion of the horn is disposed in the recessed portion.

In the just-described motorcycle, the front cover is formed so that the lower front edge is disposed more forward than the upper front edge as viewed from the side of the vehicle, and the headlight is disposed in the lower portion of the front cover. This enables the motorcycle to have a larger headlight. The horn is exposed and positioned between the headlight and the front fender as viewed from the front of the vehicle. This enables the motorcycle to have a larger headlight and at the same time ensures a sufficient volume of the horn.

In one embodiment of the present invention, the horn comprises an upper portion positioned rearward of a portion of the front cover or a portion of the headlight, a lower portion positioned rearward of a portion of the front fender, and an exposed portion exposed and positioned between the upper portion and the lower portion.

This ensures a sufficient volume of the horn and at the same time makes it possible to shorten the distance between the front cover and the front fender, or between the headlight and the front fender. As a result, the front portion of the motorcycle can be made compact in size.

In another embodiment of the present invention, a side-to-side length of the headlight is longer than a side-to-side length of the front fender, as viewed from the front of the vehicle.

This allows the motorcycle to have a larger headlight.

This allows the front cover or the headlight to be closer to the front fender. As a result, the front portion of the motorcycle can be made more compact in size.

In another embodiment of the present invention, the recessed portion of the front fender has a water drain hole formed therein.

Since the recessed portion is provided in the front fender, water may remain inside the recessed portion in rainy weather, for example. However, providing the water drain hole in the recessed portion can prevent water from remaining in the recessed portion.

In another embodiment of the present invention, the water drain hole has a labyrinth-shaped passage.

This inhibits the mud, dust, and the like that are splashed up by the front wheel from entering the recessed portion.

In another embodiment of the present invention, the horn is mounted to the under bracket.

If the horn is not firmly supported, the horn causes vibrations when outputting sound. As a consequence, good sound may not be output. The under bracket is a highly rigid part that is mounted to the steering shaft and the front fork. Therefore, the horn can be firmly supported by mounting the horn to the under bracket. As a result, good sound can be output from the horn. It should be noted that the horn may be directly mounted to the under bracket or may be indirectly mounted thereto via another component such as a stay.

In another embodiment of the present invention, the under bracket has a front wall portion having a surface facing forward and obliquely upward. The horn is mounted to the front wall portion.

This allows the horn to be mounted to the under bracket easily by working from the front.

In another embodiment of the present invention, the motorcycle further comprises an electric wire connected to the horn. The front fender is fixed to the under bracket. The electric wire extends either rearward or rearward and obliquely downward through below the under bracket and above the front fender. A portion of the electric wire is fixed to the front fender behind the front fork.

Since the horn is mounted to the under bracket, it moves along with the turning of the steering shaft. As a consequence, the portion of the electric wire adjacent to the horn also moves along with turning of the steering shaft, so a portion of the electric wire may be slackened or stretched. Nevertheless, a portion of the electric wire is fixed to the front fender. Since the front fender is fixed to the under bracket, it turns along with the steering shaft. Therefore, the portion of the electric wire adjacent to the horn, that is, the portion of the electric wire between the connecting portion with the horn and the portion secured to the front fender, does not sag or stretch easily when the steering shaft is turned. As a result, the durability of the electric wire is improved.

In another embodiment of the present invention, the front fender has a front portion extending upward toward the rear, and a rear portion extending downward toward the rear. The horn is disposed above the rear portion so as to face either forward or forward and obliquely upward.

This allows the sound that is output from the horn to transmit to the front sufficiently, and ensures a sufficient volume of the horn.

In another embodiment of the present invention, a portion of the horn is disposed behind a portion of the headlight.

Thereby, the headlight and the horn are disposed so as to partially overlap with each other with respect to a vertical direction, so the front portion of the motorcycle can be made more compact.

### ADVANTAGEOUS EFFECTS OF INVENTION

The present invention makes it possible to provide a motorcycle capable of having a large-sized headlight and ensuring a sufficient volume of the horn.

### BRIEF DESCRIPTION OF DRAWINGS

Fig. 1 is a left side view illustrating a motorcycle according to one embodiment of the invention;
Fig. 2 is a front view illustrating a portion of the motorcycle according to one embodiment of the invention;
Fig. 3 is a cross-sectional view taken along line III-III of Fig. 2, illustrating a portion near the horn;
Fig. 4 is a perspective view illustrating a horn, a front fender, and so forth;
Fig. 5 is a cross-sectional view illustrating a recessed portion of the front fender near a water drain hole;
Fig. 6 is a cross-sectional view illustrating a water drain hole according to a modified example; and
Fig. 7 is a side view illustrating how an electric wire is arranged.

### DESCRIPTION OF EMBODIMENTS

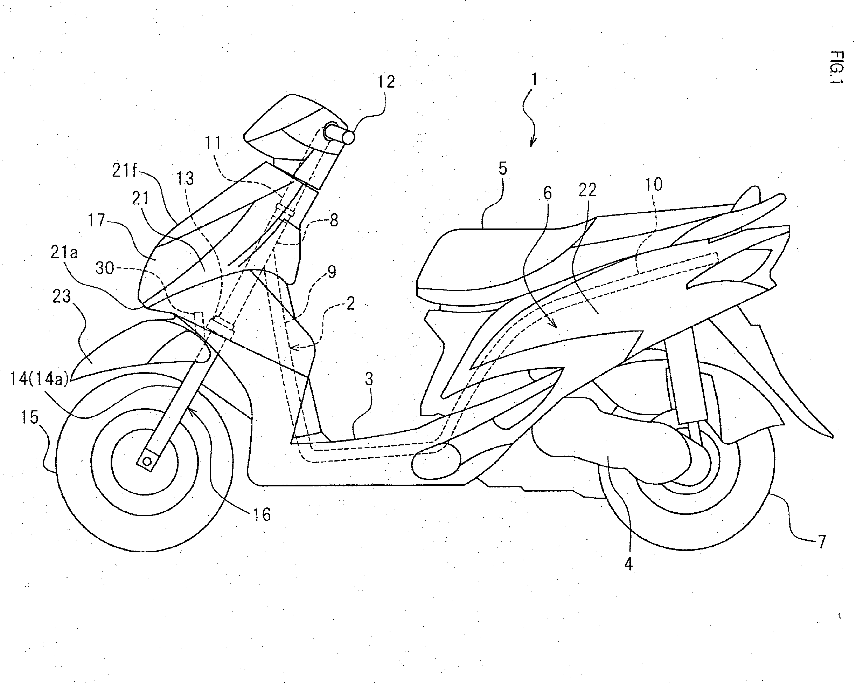

Hereinbelow, embodiments of the present invention will be described. As illustrated in Fig. 1, a motorcycle 1 according to the present embodiment is a scooter type motorcycle 1 having a low-floor foot board 3. The motorcycle according to the present invention is, however, not limited to the scooter type motorcycle but may be a moped-type motorcycle or other type of motorcycle. In the following description, the terms "front," "rear," "left," and "right" respectively refer to front, rear, left, and right as defined based on the perspective of the rider seated on a seat 5.

The motorcycle 1 has a body frame 2, an engine unit 4 having an engine and a belt-type continuously variable transmission, which are not shown in the drawings, a seat 5 supported by the body frame 2, and a vehicle body cover 6 for covering the body frame 2. A front portion of the engine unit 4 is supported by a horizontal pivot shaft (not shown) swingably to the body frame 2. A rear wheel 7 is supported at a rear portion of the engine unit 4.

The body frame 2 has a head pipe 8, a main frame 9 extending rearward and obliquely downward from the head pipe 8, and a seat frame 10 extending rearward and obliquely upward from a rear end portion of the main frame 9. The seat 5 is supported by the seat frame 10. A steering shaft 11 is inserted through the head pipe 8. The steering shaft 11 is supported rotatably by the head pipe 8. A handlebar 12 is fixed to an upper end portion of the steering shaft 11. An under bracket 13 is fixed to a lower end portion of the steering shaft 11. The under bracket 13 is disposed below the head pipe 8. A front fork 14 having a pair of left and right rod-shaped parts 14a is fixed to the under bracket 13. A front wheel 15 is attached to lower portions of the rod-shaped parts 14a.

The vehicle body cover 6 has a front cover 21 that covers at least a front portion of the head pipe 8 and a side cover 22 that covers the sides of the main frame 9 and the seat frame 10. The front cover 21 is disposed in front of the head pipe 8, and the side cover 22 is disposed at the side of the main frame 9 and the seat frame 10. As viewed from the side of the vehicle, a front edge 21 f of the front cover 21 is configured so that its lower edge is positioned more forward than its upper edge. As viewed from the side of the vehicle, the front edge 21 f of the front cover 21 is inclined downward toward the front.

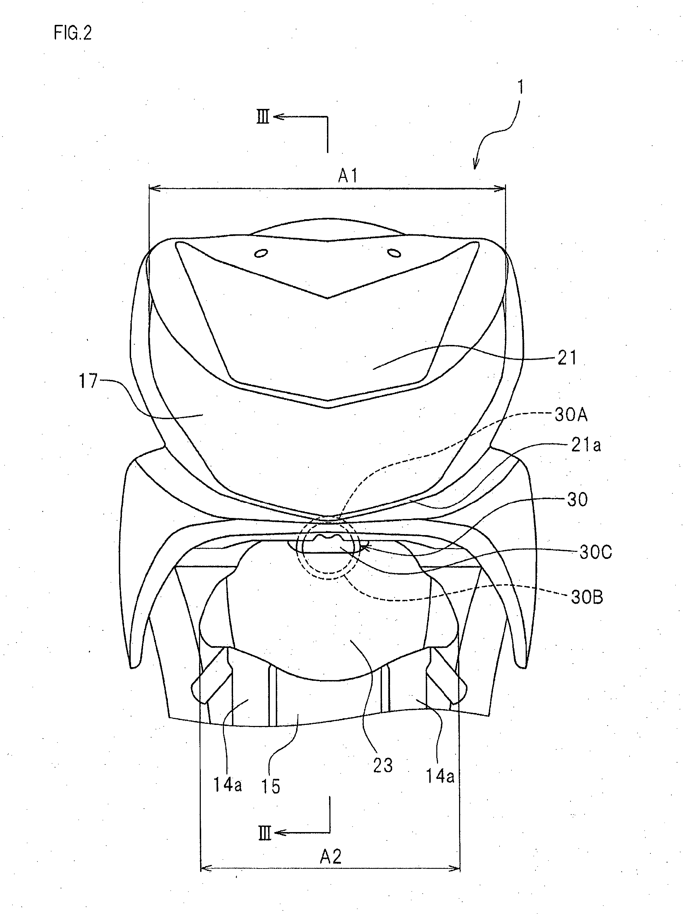

A headlight 17 is disposed in a lower portion of the front cover 21. As illustrated in Fig. 2, the side-to-side length A1 of the headlight 17 is longer than the side-to-side length A2 of a later-described front fender 23. The headlight 17 is a large-sized headlight. As illustrated in Fig. 1, the vertical length of the headlight 17 is greater than 1/2 of the vertical length of the front cover 21. As illustrated in Fig. 2, the headlight 17 is formed in a U-shape as viewed from the front of the vehicle.

In the present embodiment, an opening is formed in a lower portion of the front cover 21, and the headlight 17 is disposed within the opening. In the present embodiment, a portion 21a of the front cover 21 is disposed below the headlight 17. The shapes and arrangements of the front cover 21 and the headlight 17, however, may be modified as appropriate. For example, it is possible that the front cover 21 may not exist below the headlight 17. It is also possible that the headlight 17 may be positioned below the front cover 21 in the vertical cross section through the vehicle center line, i.e., in the vertical cross section along the vehicle fore-and-aft direction through the vehicle widthwise central position.

A front fender 23 is disposed below the front cover 21. The front fender 23 is disposed above the front wheel 15 so as to cover a region over the front wheel 15. The front fender 23 is secured to the under bracket 13. The front fender 23 turns along with the front wheel 15. That is, the front fender 23 is allowed to turn by operating the handlebar 12.

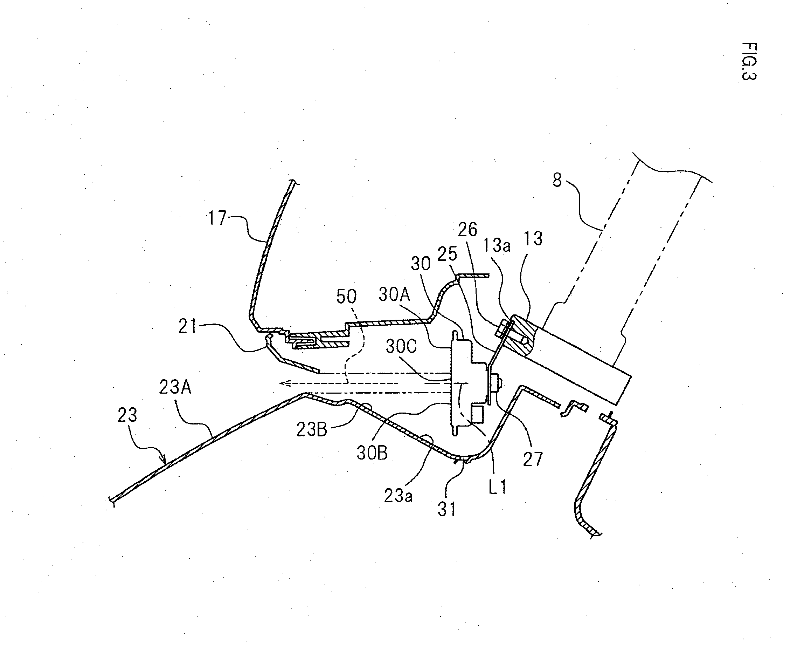

As illustrated in Fig. 3, a horn 30 is mounted to the under bracket 13. More specifically, the under bracket 13 has a front wall portion 13a having a surface facing forward and obliquely upward. In other words, the under bracket 13 has the front wall portion 13a having a surface extending rearward and obliquely upward. A stay 25 is secured to the front wall portion 13a by a bolt 26. The horn 30 is secured to the stay 25 by a bolt 27. In this way, the horn 30 is secured to the under bracket 13 via the stay 25. In other words, the horn 30 is indirectly mounted to the front wall portion 13a of the under bracket 13. The way of mounting the horn 30 is not particularly limited. For example, it is also possible to directly mount the horn 30 to the front wall portion 13a of the under bracket 13. In the present specification, the term "to mount" means to include both the case in which a part is directly mounted and the case in which the part is indirectly mounted using another member, unless specifically indicated otherwise.

The steering shaft 11, the under bracket 13, and the front fork 14 are positioned more forward toward their lower ends. Therefore, the lower the horn 30 is disposed, the more forward the horn 30 is positioned. The more forward the horn 30 is disposed, the farther forward the sound of the horn 30 tends to reach. For this reason, it is more preferable that the position of the horn 30 be at a lower position than at an upper position. When the horn 30 is disposed at an upper position, it is necessary to extend the stay for supporting the horn 30 more forward in order to dispose the horn 30 more forward. This may cause the horn 30 to vibrate more easily. In addition, this means that the horn 30 is positioned above the front wheel 15, causing the horn 30 to vibrate more easily.

As illustrated in Fig. 2, the horn 30 is disposed between the headlight 17 and the front fender 23 as viewed from the front of the vehicle. In the present embodiment, the portion 21a of the front cover 21 is disposed below the headlight 17. As viewed from the front of the vehicle, the horn 30 is disposed between the portion 21 a of the front cover 21 and the front fender 23.

As illustrated in Fig. 2, a portion of the horn 30 is exposed, as viewed from the front of the vehicle. More specifically, the horn 30 has an upper portion 30A, a lower portion 30B, and an exposed portion 30C. The upper portion 30A is covered by a portion of the front cover 21 and a portion of the headlight 17 as viewed from the front of the vehicle. The lower portion 30B is covered by a portion of the front fender 23 as viewed from the front of the vehicle. The exposed portion 30C is exposed when viewed from the front. As illustrated in Fig. 3, the upper portion 30A is positioned rearward of a portion of the front cover 21 and a portion of the headlight 17, the lower portion 30B is positioned rearward of a portion of the front fender 23, and the exposed portion 30C is positioned between the upper portion 30A and the lower portion 30B. In an embodiment in which the portion of the front cover 21 does not exist below the headlight 17, the upper portion 30A of the horn 30 may be covered by a portion of the headlight 17 or may be positioned rearward of a portion of the headlight 17.

As illustrated in Figs. 1 and 2, any opening for the horn 30 is not formed in the front cover 21. In other words, the front cover 21 does not have any opening for emitting the sound (see reference numeral 50 in Fig. 3) that is output from the horn 30 forward, and any opening is not formed in front of the horn 30. Of course, the headlight 17 does not have any opening for the horn 30 either. In other words, any opening for the horn 30 is not formed over the entirety of the front cover 21 and the headlight 17.

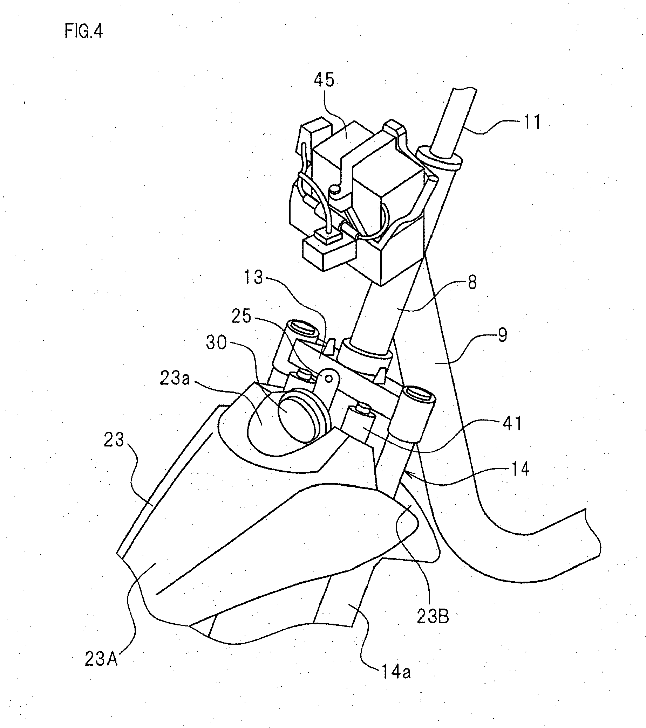

As illustrated in Fig. 4, a recessed portion 23a that is recessed downward is formed in the front fender 23. In the present embodiment, the recessed portion 23a is formed at the left-right wise center of the front fender 23. Moreover, the recessed portion 23a is formed more rearward than the fore-and-aft-wise center of the front fender 23. The position of the recessed portion 23a is, however, not limited to the just-mentioned position. As illustrated in Fig. 3, the lower portion 30B of the horn 30 is disposed in the recessed portion 23a of the front fender 23. The lower end of the horn 30 is positioned more upward of the front end and the rear end of the recessed portion 23a of the front fender 23. It is preferable that the recessed portion 23a be formed in a shape that fits the shape of the horn 30. In the present embodiment, the horn 30 is formed in a substantially disk shape. The recessed portion 23a is formed in a substantially circular arc shape as viewed from the front.

The front fender 23 is formed in a substantially circular arc shape. The front fender 23 has a front portion 23A extending upward toward the rear, and a rear portion 23B extending downward toward the rear. In the present embodiment, the recessed portion 23a is formed in the rear portion 23B. However, the recessed portion 23a may be formed so as to extend from the front portion 23A to the rear portion 23B. As illustrated in Fig. 3, the horn 30 is disposed above the rear portion 23B. The horn 30 is disposed facing forward. In other words, the center axis L1 of the horn 30 extends in a horizontal direction. The rear portion 23B of the front fender 23 extends forward and obliquely upward. Accordingly, by disposing the horn 30 so as to face forward and obliquely upward, the horn 30 can be disposed along the rear portion 23B. Thus, the orientation of the horn 30 may be forward and obliquely upward. However, the orientation of the horn 30 is not limited to forward, or forward and obliquely upward. The orientation of the horn 30 may be forward and obliquely downward.

Since the recessed portion 23a is formed in the front fender 23, water may enter the recessed portion 23a, for example, when the motorcycle 1 runs in rain conditions, and the water may remain in the recessed portion 23a. In the present embodiment, a water drain hole 31 is formed in the recessed portion 23a. It is preferable that the water drain hole 31 be formed in a bottom portion of the recessed portion 23a. It is more preferable that the water drain hole 31 be formed at the lowest portion of the recessed portion 23a.

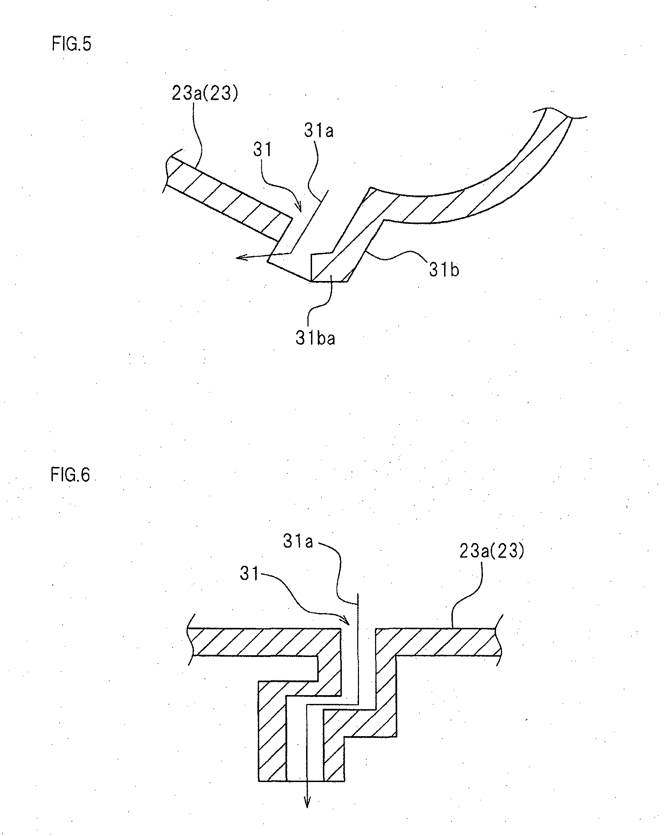

As illustrated in Fig. 5, the water drain hole 31 has a labyrinth-shaped passage 31 a. The term "labyrinth-shaped passage" herein means a passage in which its axis direction changes discontinuously. In the present embodiment, a vertical wall 31b is formed around the water drain hole 31, and a lower portion 31ba of the vertical wall 31b is bent forward. Thereby, the passage 31 a in which its axial direction changes discontinuously is formed. The specific shape of the labyrinth-shaped passage 31 a is not limited, and a zig-zag shaped passage as shown in Fig. 6 may be employed. The labyrinth-shaped passage 31 a may be a meandering passage.

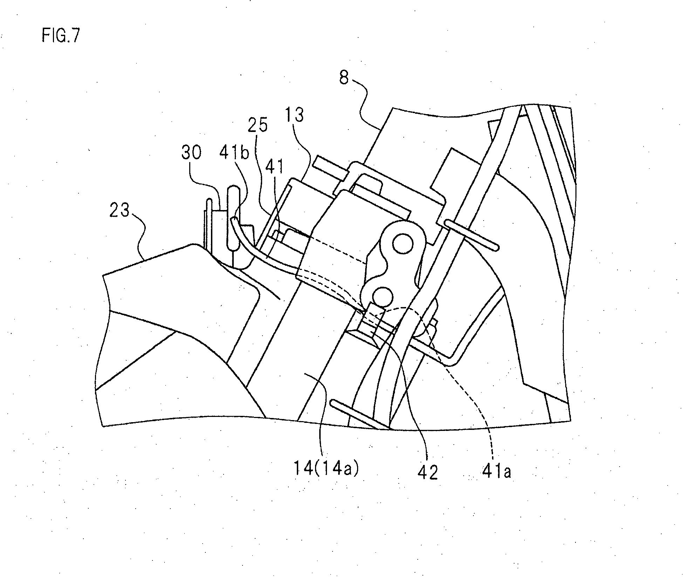

As illustrated in Fig. 4, a battery 45 is disposed in front of the head pipe 8. As illustrated in Fig. 7, an electric wire 41 for supplying signal to the horn 30 is connected to the horn 30. The electric wire 41 extends rearward and obliquely downward through below the under bracket 13 and above the front fender 23. A clamp 42 is provided on the front fender 23 behind the front fork 14. A portion 41 a of the electric wire 41 is secured to the clamp 42. It is also possible to provide another clamp on another part of the front fender 23 so that another portion of the electric wire 41 can be secured by the other clamp. Although not shown in the drawings, the electric wire 41 is connected to the battery 45.

As described above, the horn 30 is mounted to the under bracket 13. The under bracket 13 is fixed to the steering shaft 11, and it turns around the axial center of the steering shaft 11 along with the handlebar 12 (see Fig. 1). As the handlebar 12 turns, the horn 30 also turns around the axial center of the steering shaft 11. As a consequence, the electric wire 41 connected to the horn 30 may be slackened or stretched. For example, in the case where the electric wire 41 is disposed more leftward than the vehicle center line, when the handlebar 12 is turned leftward, the electric wire 41 may be slackened, while when the handlebar 12 is turned rightward, the electric wire 41 may be stretched. Nevertheless, in the present embodiment, the portion 41a of the electric wire 41 is secured by the clamp 42 provided on the front fender 23. Since the front fender 23 is mounted to the under bracket 13, the front fender 23 turns along with the handlebar 12. Therefore, when the handlebar 12 is turned, a portion of the electric wire 41 between a connecting portion 41b with the horn 30 and a portion 41a secured to the clamp 42 turns integrally with the under bracket 13, the horn 30, and the front fender 23. As a result, the electric wire 41 is prevented from being slackened or stretched at that location.

As described above, in the present embodiment, the front cover 21 is formed so as to have a front end 21f having an upper end and a lower end, and so that the lower end is positioned more forward than the upper end as viewed from the side of the vehicle, as illustrated in Fig. 1. The headlight 17 is disposed in a lower portion of the front cover 21. In addition, as illustrated in Fig. 2, the horn 30 is exposed and positioned between the headlight 17 and the front fender 23, as viewed from the front of the vehicle. This enables the motorcycle to have a larger headlight 17 and at the same time ensures a sufficient volume of the horn 30.

As illustrated in Fig. 2, the side-to-side length A1 of the headlight 17 is longer than the side-to-side length A2 of the front fender 23. Thus, according to the present embodiment, it is unnecessary to reduce the size of the headlight 17 in order to ensure a sufficient volume of the horn 30, so it is possible to increase the size of the headlight 17.

In the present embodiment, as illustrated in Fig. 3, the horn 30 has the upper portion 30A, the lower portion 30B, and the exposed portion 30C. The upper portion 30A is positioned rearward of a portion of the front cover 21 or a portion of the headlight 17, the lower portion 30B is positioned rearward of a portion of the front fender 23, and the exposed portion 30C is positioned between the upper portion 30A and the lower portion 30B. This ensures a sufficient volume of the horn 30 and at the same time makes it possible to shorten the distance between the front cover 21 and the front fender 23, or between the headlight 17 and the front fender 23. As a result, the front portion of the motorcycle 1 can be made compact in size.

In the present embodiment, the front fender 23 has the recessed portion 23a, and the lower portion 30B of the horn 30 is disposed in the recessed portion 23a, as illustrated in Fig. 3. By disposing the lower portion 30B of the horn 30 in the recessed portion 23a in this way, the distance between the front cover 21 and the front fender 23 can be shortened while the horn 30 is disposed between the front cover 21 and the front fender 23, as illustrated in Fig. 2. As a result, the front portion of the motorcycle 1 can be made compact in size.

Since the recessed portion 23a is provided in the front fender 23, water may remain inside the recessed portion 23a when in rainy weather, for example. However, as illustrated in Figs. 3 and 5, the water drain hole 31 is formed in the recessed portion 23a. The water in the recessed portion 23a flows down through the water drain hole 31. Therefore, the water is prevented from remaining in the recessed portion 23a.

In the present embodiment, the water drain hole 31 has the labyrinth-shaped passage 31a (see Figs. 5 and 6). As a result, the water in the recessed portion 23a can be smoothly drained. On the other hand, it is possible to inhibit the mud, dust, and the like that are splashed up by the front wheel from going up through the water drain hole 31 and entering the recessed portion 23a. As a result, the horn 30 can be kept from becoming dirty.

In the present embodiment, the horn 30 is mounted to the under bracket 13, as illustrated in Fig. 3. The under bracket 13 is a highly rigid part that is mounted to the steering shaft 11 and the front fork 14 (see Fig. 1). Therefore, the horn 30 can be firmly supported by mounting the horn 30 to the under bracket 13. If the horn 30 is not firmly supported, the horn 30 itself causes vibrations as the horn 30 outputs sound. As a consequence, good sound may not be output from the horn 30. However, according to the present embodiment, the horn 30 can be supported firmly, so good sound can be output from the horn 30. A sufficient volume of the horn 30 can be ensured.

In addition, the under bracket 13 has the front wall portion 13a having a surface facing forward and obliquely upward, and the horn 30 is mounted to the front wall portion 13a. This allows the horn 30 to be mounted to the under bracket 13 easily by working from the front.

In the present embodiment, the electric wire 41 connected to the horn 30 extends either rearward or rearward and obliquely downward, through below the under bracket 13 and above the front fender 23, as illustrated in Fig. 7. A portion 41 a of the electric wire 41 is secured to the front fender 23 behind the front fork 14 by the clamp 14. Therefore, a portion of the electric wire 41 between a connecting portion 41b with the horn 30 and a portion 41a secured to the clamp 42 turns along with the turning of the steering shaft 11. The just-described portion of the electric wire 41 does not sag or stretch easily when the steering shaft 11 turns. Therefore, the durability of the electric wire 41 can be improved.

In the present embodiment, the front fender 23 has the front portion 23A extending upward toward the rear, and the rear portion 23B extending downward toward the rear, as illustrated in Fig. 3. The horn 30 is disposed above the rear portion 23B so as to face either forward or forward and obliquely upward. As a result, the horn 30 can be disposed in a posture that fits the shape of the front fender 23. The sound that is output from the horn 30 is less likely to be blocked by the front fender 23. As a result, the sound that is output from the horn 30 can be easily transmitted to the front sufficiently.

As illustrated in Fig. 3, a portion of the horn 30 is disposed behind a portion of the headlight 17. In other words, the headlight 17 and the horn 30 are disposed so as to partially overlap with each other with respect to a vertical direction. As a result, the front portion of the motorcycle 1 can be made more compact.

### REFERENCE SIGNS LIST

1 -- Motorcycle
8-- Head pipe
11 -- Steering shaft
12 -- Handlebar
13 -- Under bracket
14 Front fork
15 -- Front wheel
21 -- Front cover
23 -- Front fender
23a -- Recessed portion
30 -- Horn
30A -- Upper portion of the horn
30B -- Lower portion of the horn
30C -- Exposed portion of the horn
31 -- Water drain hole

## Claims

1. A motorcycle (1) comprising:
a steering shaft (11) fixed to a handlebar (12);
an under bracket (13) provided on a lower portion of the steering shaft (11);
a front fork (14) mounted to the under bracket (13);
a front wheel (15) supported at a lower portion of the front fork (14);
a front fender (23) disposed above the front wheel (15) and allowed to turn by operating the handlebar (12);
a head pipe (8) for rotatably supporting the steering shaft (11);
a front cover (21) being disposed in front of the head pipe (8) and being formed so as to have a front edge (21 f) comprising an upper front edge and a lower front edge, and so that the lower front edge is positioned more forward than the upper front edge as viewed from the side of the vehicle;
a headlight (17); and
a horn (30) exposed and positioned between a portion (21a) of the front cover (21) and the front fender (23) as viewed from the front of the vehicle, **characterized in that**
the front fender (23) has a recessed portion (23a) recessed downward, and
a portion of the horn (30) is disposed in the recessed portion (23a).

2. The motorcycle (1) according to claim 1, wherein the horn (30) comprises an upper portion (30A) positioned rearward of a portion of the front cover (21) or a portion of the headlight (17), a lower portion (30B) positioned rearward of a portion of the front fender (23), and an exposed portion (30C) exposed and positioned between the upper portion (30A) and the lower portion (30B).

3. The motorcycle (1) according to claim 1, wherein, as viewed from the front of the vehicle, a side-to-side length of the headlight (17) is longer than a side-to-side length of the front fender (23).

4. The motorcycle (1) according to claim 1, wherein the recessed portion (23a) of the front fender (23) has a water drain hole (31) formed therein.

5. The motorcycle (1) according to claim 4, wherein the water drain hole (31) has a labyrinth-shaped passage.

6. The motorcycle (1) according to claim 1, wherein the horn (30) is mounted to the under bracket (13).

7. The motorcycle (1) according to claim 6, wherein:
the under bracket (13) has a front wall portion (13a) having a surface facing forward and obliquely upward; and
the horn (30) is mounted to the front wall portion (13a).

8. The motorcycle (1) according to claim 6, further comprising:
an electric wire (41) connected to the horn (30); and wherein
the front fender (23) is fixed to the under bracket (13);
the electric wire (41) extends either rearward or rearward and obliquely downward through below the under bracket (13) and above the front fender (23); and
a portion (41 a) of the electric wire (41) is fixed to the front fender (23) behind the front fork (14).

9. The motorcycle (1) according to claim 1, wherein:
the front fender (23) has a front portion (23A) extending upward toward the rear, and a rear portion (23B) extending downward toward the rear; and
the horn (30) is disposed above the rear portion (23B) so as to face either forward or forward and obliquely upward.

10. The motorcycle (1) according to claim 1, wherein a portion of the horn (30) is disposed behind a portion of the headlight (17).

## Patentansprüche

1. Ein Motorrad (1), das folgende Merkmale aufweist:
eine Lenkwelle (11), die an einer Lenkstange (12) befestigt ist;
eine untere Stütze (13), die auf einem unteren Abschnitt der Lenkwelle (11) vorgesehen ist;
eine Vordergabel (14), die an der unteren Stütze (13) angebracht ist;
ein Vorderrad (15), das an einem unteren Abschnitt der Vordergabel (14) getragen wird;
ein vorderes Schutzblech (23), das über dem Vorderrad (15) angeordnet ist und das durch Betreiben der Lenkstange (12) gedreht werden kann;
ein Kopfrohr (8) zum drehbaren Tragen der Lenkwelle (11);
eine vordere Abdeckung (21), die vor dem Kopfrohr (8) angeordnet ist und gebildet ist, um eine Vorderkante (21f) aufzuweisen, die eine obere Vorderkante und untere Vorderkante aufweist, und so dass die untere Vorderkante von der Seite des Fahrzeugs aus gesehen weiter vorne angeordnet ist als die obere Vorderkante;
einen Scheinwerfer (17); und
eine Hupe (30), die von der Vorderseite des Fahrzeugs aus gesehen zwischen einem Abschnitt (21 a) der vorderen Abdeckung (21) und dem vorderen Schutzblech (23) freigelegt und positioniert ist, **dadurch gekennzeichnet, dass**
das vordere Schutzblech (23) einen ausgenommenen Abschnitt (23a) aufweist, der nach unten ausgenommen ist, und
ein Abschnitt der Hupe (30) in dem ausgenommenen Abschnitt (23a) angeordnet ist.

2. Das Motorrad (1) gemäß Anspruch 1, bei dem die Hupe (30) einen oberen Abschnitt (30A), der hinter einem Abschnitt der vorderen Abdeckung (21) oder einem Abschnitt des Scheinwerfers (17) angeordnet ist, einen unteren Abschnitt (30B), der hinter einem Abschnitt des vorderen Schutzblechs (23) angeordnet ist, und einen freigelegten Abschnitt (30C) aufweist, der zwischen dem oberen Abschnitt (30A) und dem unteren Abschnitt (30B) freigelegt und positioniert ist.

3. Das Motorrad (1) gemäß Anspruch 1, bei dem von der Vorderseite des Fahrzeugs aus gesehen eine Seite-zu-Seite-Länge des Scheinwerfers (17) länger ist als eine Seite-zu-Seite-Länge des vorderen Schutzblechs (23).

4. Das Motorrad (1) gemäß Anspruch 1, bei dem der ausgenommene Abschnitt (23a) des vorderen Schutzblechs (23) ein Wasserablaufloch (31) aufweist, das in demselben gebildet ist.

5. Das Motorrad (1) gemäß Anspruch 4, bei dem das Wasserablaufloch (31) einen Labyrinth förmigen Durchgang aufweist.

6. Das Motorrad (1) gemäß Anspruch 1, bei dem die Hupe (30) an der unteren Stütze (13) angebracht ist.

7. Das Motorrad (1) gemäß Anspruch 6, bei dem
die untere Stütze (13) einen Vorderwandabschnitt (13a) aufweist mit einer Oberfläche, die nach vorne und schräg nach oben gerichtet ist; und
die Hupe (30) an dem Vorderwandabschnitt (13a) angebracht ist.

8. Das Motorrad (1) gemäß Anspruch 6, das ferner folgende Merkmale aufweist:
einen elektrischen Draht (41), der mit der Hupe (30) verbunden ist; und wobei
das vordere Schutzblech (23) an der unteren Stütze (13) befestigt ist;
der elektrische Draht (41) sich entweder nach hinten oder nach hinten und schräg nach unten erstreckt, unterhalb der unteren Stütze (13) und oberhalb des Schutzblechs (23); und
ein Abschnitt (41 a) des elektrischen Drahts (41) an dem vorderen Schutzblech (23) hinter der Vordergabel (14) befestigt ist.

9. Das Motorrad (1) gemäß Anspruch 1, bei dem:
das vordere Schutzblech (23) einen vorderen Abschnitt (23A) aufweist, der sich nach oben zu der Rückseite hin erstreckt, und einen hinteren Abschnitt (23B), der sich nach unten zu der Rückseite hin erstreckt; und
die Hupe (30) über dem hinteren Abschnitt (23B) angeordnet ist, um entweder nach vorne oder nach vorne und schräg nach oben gerichtet zu sein.

10. Das Motorrad (1) gemäß Anspruch 1, bei dem ein Abschnitt der Hupe (30) hinter einem Abschnitt des Scheinwerfers (17) angeordnet ist.

## Revendications

1. Motocyclette (1) comprenant:
un arbre de direction (11) fixé à un guidon (12);
un support inférieur (13) prévu sur une partie inférieure de l'arbre de direction (11);
une fourche avant (14) montée sur le support inférieur (13);
une roue avant (15) supportée dans une partie inférieure de la fourche avant (14);
un garde-boue avant (23) disposé au-dessus de la roue avant (15) et pouvant tourner en actionnant le guidon (12);
un tuyau de tête (8) destiné à supporter en rotation l'arbre de direction (11);
un couvercle avant (21) disposé en face du tuyau de tête (8) et formé de manière à présenter un bord avant (21f) comprenant un bord avant supérieur et un bord avant inférieur, et de sorte que le bord avant inférieur soit positionné plus en avant que le bord avant supérieur, tel que vu depuis le côté du véhicule;
un phare (17); et
un avertisseur (30) exposé et positionné entre une partie (21a) du couvercle avant (21) et le garde-boue avant (23), tel que vu depuis l'avant du véhicule,
**caractérisée par le fait que**
le garde-boue avant (23) présente une partie évidée (23a) en creux vers le bas, et
une partie de l'avertisseur (30) est disposée dans la partie évidée (23a).

2. Motocyclette (1) selon la revendication 1, dans laquelle l'avertisseur (30) comprend une partie supérieure (30A) positionnée à l'arrière d'une partie du couvercle avant (21) ou d'une partie du phare (17), une partie inférieure (30B) positionnée vers l'arrière d'une partie du garde-boue avant (23), et une partie exposée (30C) exposée et positionnée entre la partie supérieure (30A) et la partie inférieure (30B).

3. Motocyclette (1) selon la revendication 1, dans laquelle, tel que vu de l'avant du véhicule, une longueur de côté à côté du phare (17) est plus longue qu'une longueur de côté à côté du garde-boue avant (23).

4. Motocyclette (1) selon la revendication 1, dans laquelle la partie évidée (23a) du garde-boue avant (23) comporte un trou de drainage d'eau (31) y formé.

5. Motocyclette (1) selon la revendication 4, dans laquelle le trou de drainage d'eau (31) présente un passage en forme de labyrinthe.

6. Motocyclette (1) selon la revendication 1, dans laquelle l'avertisseur (30) est monté sur le support inférieur (13).

7. Motocyclette (1) selon la revendication 6, dans laquelle:
le support inférieur (13) comporte une partie de paroi avant (13a) présentant une surface orientée vers l'avant et obliquement vers le haut; et
l'avertisseur (30) est monté sur la partie de paroi avant (13a).

8. Motocyclette (1) selon la revendication 6, comprenant par ailleurs:
un câble électrique (41) connecté à l'avertisseur (30);
et dans laquelle
le garde-boue avant (23) est fixé au support inférieur (13);
le câble électrique (41) s'étend soit vers l'arrière, soit vers l'arrière et obliquement vers le bas par-dessous le support inférieur (13) et au-dessus du garde-boue avant (23); et
une partie (41a) du câble électrique (41) est fixée au garde-boue avant (23) derrière de la fourche avant (14).

9. Motocyclette (1) selon la revendication 1, dans laquelle:
le garde-boue avant (23) présente une partie avant (23A) s'étendant vers le haut et vers l'arrière, et une partie arrière (23 B) s'étendant vers le bas et vers l'arrière; et
l'avertisseur (30) est disposé au-dessus de la partie arrière (23B), de manière à être orienté soit vers l'avant, soit vers l'avant et obliquement vers le haut.

10. Motocyclette (1) selon la revendication 1, dans laquelle une partie de l'avertisseur (30) est disposée derrière une partie du phare (17).
